# EUROPÄISCHE PATENTSCHRIFT

(11) **EP 1 584 151 B1**
(45) Veröffentlichungstag und Bekanntmachung des Hinweises auf die Patenterteilung: **03.01.2007**
(21) Anmeldenummer: 04701288.5
(22) Anmeldetag: 10.01.2004
(51) Int. Cl.: H04J 13/00

(54) **Verfahren zum übertragen eines Daten-Worts**
Method for the transmission of a data word
Procédé pour transmettre un mot de donnée

(30) Priorität: 12.01.2003 DE 10301250
(43) Veröffentlichungstag der Anmeldung: 12.10.2005
(73) Patentinhaber: Wolf, Andreas Christian, 12157 Berlin (DE)
(72) Erfinder: Wolf, Andreas Christian, 12157 Berlin (DE)
(86) Internationale Anmeldenummer: PCT/DE2004/000047
(87) Internationale Veröffentlichungsnummer: WO 2004/064279

(56) Entgegenhaltungen:
- GB-A- 1 372 137
- US-A- 5 063 571

## Beschreibung

Die Erfindung liegt auf dem Gebiet der Datenübertragung durch ein beliebiges Medium, insbesondere der Datenübertragung binärer Signale in einem bandbegrenzten Funkkanal, und betrifft ein Verfahren zum Übertragen eines Daten-Worts, das eine Folge von einzelnen Daten in aufeinanderfolgenden Datenpositionen enthält.

Mit sich stetig erweiternden Anwendungsgebieten für die Datenübertragung und mit zunehmendem Volumen zu übertragender Daten wächst der Bedarf an Übertragungsverfahren, die unter Einsatz einfacher und preiswerter Mittel eine hohe Datenrate mit geringer Datenfehlerrate bzw. mit hoher Toleranz gegen Datenübertragungsfehler übertragen können.

Wesentliche leistungskennzeichnende Größen heutiger Übertragungsverfahren sind die Übertragung von Bit/s pro Hz Bandbreite des Kanals (kanalspezifische Datenrate) und die Störunempfindlichkeit.

Vor diesem Hintergrund geht aus dem sich auf den IEEE Standard 802.15.4 (Low Rate Wireless Personal Area Network) beziehenden Realisierungsvorschlag "PHY Proposal for the Low Rate 802.15.4 Standard" von Ed Callaway, Motorola Labs, (http://grouper.ieee.org/groups/802/15/index.html) die Verwendung von Sequenzen (Code-Wörtern) hervor, die durch zyklische Verschiebung eines Pseudo-Noise-Grund-Wortes generiert werden. Danach ist jedem Code-Wort ein 4-Bit-Daten-Wort zugeordnet. Nach Übertragung des Code-Worts kann durch Korrelation mit einer Code-Referenz das ursprüngliche 4-Bit-Daten-Wort aus der Phasenlage des Maximums der Korrelationsfunktion identifiziert werden.

Dieses Verfahren ist jedoch in seiner Leistungsfähigkeit insbesondere hinsichtlich der Datenrate relativ eingeschränkt.

Aus einem Aufsatz von Letaief et al. ("Multicode High-Speed Transmission for Wireless Mobile Communikations"; IEEE, GLO-BECOM 1995, 13 - 17 Nov. 1995, Vol 3, Seiten 1835 - 1839) geht ein Verfahren zum Übertragen eines Datenworts hervor, bei dem ein eingehendes Datenwort seriell-parallel umgesetzt wird in mehrere parallele Bitdatenströme. Für jeden Datenstrom einer bestimmten Datenposition wird das jeweilige binäre Datum mit einem individuell zugeordneten Codewort ("Signature Sequence") verknüpft und anschließend mit einem Träger moduliert. Die modulierten Signale aller Bitdatenströme werden dann parallel an einen Empfänger übertragen und treten dort addiert auf. Hinsichtlich der Eigenschaften der Code-Wörter ist nur ausgeführt, dass traditionell PN-Sequenzen bei Mehrfachzugriffs-Informationstechnik verwendet werden. Dieses Verfahren ist vergleichsweise aufwendig und insbesondere hinsichtlich der Modulationsträger eingeschränkt.

Der Aufsatz von Huang, X; Li, Y. "The Multicode Interleaved DSSS System for High-Speed Wireless Digital Communikations" (IEEE, ICC 2001, 11 - 14 June 2001, Vol 10, Seiten 2990 - 2994) verweist auf die Möglichkeit, als Code-Wörter zyklisch verschobene m-Sequenzen zu verwenden.

Eine Aufgabe der Erfindung besteht darin, ein effizientes leistungsfähiges Datenübertragungsverfahren für - insbesondere binäre - zu übertragende Signale in einem bandbegrenzten Übertragungskanal zu schaffen, das sich durch eine hohe Störunempfindlichkeit und/oder eine hohe kanalspezifische Datenrate (Bit/s/Hz) auszeichnet. Außerdem soll das Verfahren mit einfachen und kostengünstigen Mitteln durchführbar sein.

Diese Aufgabe wird erfindungsgemäß gelöst durch Verfahren nach den Ansprüchen 1 und 8.

Unter Verknüpfung wird dabei eine zumindest multiplikative Verknüpfung des jeweils der Datenposition zugeordneten Code-Wortes mit dem datenpositionsindividuellen Datum verstanden, wobei zusätzlich eine Normierung oder Bewertung der Multiplikation erfolgen kann. Eine solche Verknüpfung erfolgt in analoger Technik durch bekannte analoge Multiplikation; bei digitaler Ausführung des Verfahrens kann die Multiplikation bevorzugt durch eine EX-OR-NICHT-Verknüpfung (negierte EX-OR-Verknüpfung) realisiert werden.

Die Addition der einzelnen Verknüpfungsergebnisse erfolgt in analoger Technik beispielsweise durch Summieren der das jeweilige Verknüpfungsergebnis darstellenden Analogsignale. Bei Realisierung des Verfahrens in digitaler Technik können die Digitalsignale bitstellen-weise addiert werden.

Ein erster erfindungswesentlicher Aspekt besteht darin, dass das - durch Verknüpfung des der jeweiligen einzelnen Datenpositionen individuell zugeordneten Code-Wortes mit dem jeweiligen Inhalt dieser Datenposition (nachfolgend auch Datum genannt) - erzeugte jeweilige Verknüpfungsergebnis mit den übrigen Verknüpfungsergebnissen der übrigen Datenpositionen addiert wird. Dadurch wird ein charakteristisches Summen-Wort erzeugt, das unter hoher Fehlertoleranz auf beliebigen Übertragungsstrecken, vorzugsweise per Funkübertragung, zum Empfänger übertragen werden kann.

Die ursprünglichen Informationen des zu übertragenden Daten-Worts bleiben implizit in dem Summen-Wort enthalten und werden nach dem erfindungsgemäßen Verfahren empfängerseitig extrahiert. Dazu wird das Summen-Wort mit der - bei zwei oder mehr Sätzen von Code-Vorräten gemäß Anspruch 8: jeweiligen - Referenz kreuzkorreliert. Dabei treten signifikante (Extrem-) Werte in der bzw. in den (Anspruch 8) Kreuzkorrelationsfunktionen auf, deren Lage und Größe die Information wiedergibt, welches Datum an der der Lage des Wertes entsprechenden Datenposition im Daten-Wort vorhanden ist.

Die dazu empfängerseitig erforderliche Information kann auf verschiedene Weise bereitgestellt werden. Es ist denkbar, z.B. in jedem Daten-Wort Datenpositionen für eine diesbezügliche Information zu reservieren. So könnten beispielsweise die ersten zwei Datenpositionen eines z.B. digitalen Daten-Worts mit dem höchsten bzw. niedrigsten Wert des für das Daten-Wort vorgesehenen Wertevorrats gefüllt sein. Die entsprechende Kreuzkorrelationsfunktionswerte des übertragenen Summen-Wortes geben dann die Maximal- bzw. Minimalwerte der Kreuzkorrelationsfunktion wieder; zwischen diesen liegen dann entsprechend der Wertigkeit des Daten-Wortes weitere "Bänder", in denen die ggf. weiteren Werte des Daten-Wort durch entsprechende Werte der Kreuzkorrelationsfunktion repräsentiert sind.

Voraussetzung für die Eignung einer Sequenz als Code-Wort und entsprechend als Referenz ist ihre Eigenschaft, dass ihre Autokorrelationsfunktion (d.h. Korrelation mit sich selbst) einen ausgeprägten detektierbaren Extremwert aufweist; dies impliziert, dass die Kreuzkorrelationsfunktion jedes Code-Worts aus dem Code-Wörter-Vorrat mit dieser Referenz jeweils einen ausgeprägten detektierbaren Extremwert aufweist, wobei die Lage des Extremwerts charakteristisch für das individuelle Code-Wort ist.

Nach einer bevorzugten Ausgestaltung der Erfindung werden zur Erzeugung der Code-Wörter eine m-Sequenz, ein Barker-Code, eine Gordon-Mills-Welch (GMW)-Sequenz oder ein Gold-Code verwendet. Es ist genauso denkbar, analoge Signale als Code-Wörter zu verwenden, beispielsweise zeitlich begrenzte, frequenzmodulierte Sinussignale.

Denkbar ist auch die Verwendung von komplexen Code-Wörtern. Bei diesen wird zunächst eine Aufteilung in Real- und Imaginärteil vorgenommen, indem Real- und Imaginärteil jeweils ein Code-Wort zugeordnet wird. Nach Übertragung des jeweils aus Real- bzw. Imaginärteil repräsentierenden Verknüpfungsergebnissen gebildeten Summen-Worts erfolgt eine Rück-Aufschlüsselung nach Real- und Imaginärteil in entsprechender Weise über die Zuordnung der datenpositionsindividuellen Code-Wörter. Diesbezüglich sieht eine vorteilhafte Ausgestaltung des erfindungsgemäßen Verfahrens vor, dass die Codewörter aus zyklischer Verschiebung aus einem CCK-(Complementary-Code-Keying)-Code gebildet werden.

Nach einer bevorzugten Fortbildung der Erfindung enthält das Daten-Wort unipolare duale Werte. Dies hat den Vorteil einer relativ einfachen schaltungstechnischen Realisierung. Allerdings ist im Fall eines "Null-Wortes" als Daten-Wort (d.h. alle Datenpositionen enthalten das Datum "0") eine Übertragung ohne Modulation nachteilig, weil das Summen-Wort in diesem Fall energielos ist.

Für derartige Fälle ist bevorzugt vorgesehen, dass das Daten-Wort duale bipolare Werte enthält. Damit ist die Übertragung zudem wesentlich störresistenter.

Weiter bevorzugt basiert das Daten-Wort auf einem drei- oder höherwertigen Zahlensystem. Dies hat den Vorteil einer noch höheren realisierbaren Datenübertragungsrate, wobei allerdings der Störgrößenabstand ab- und die Störempfindlichkeit entsprechend zunimmt. Unter den Bedingungen des Einzelfalls (z.B. notwendige Störsicherheit, Leistungsfähigkeit und Länge der Datenübertragungsstrecke) kann mithin eine Erhöhung der Datenübertragungsrate Verwendung höherwertiger Zahlensysteme durchaus vorteilhaft sein. Unter dreiwertigem Zahlensystem wird im Rahmen der vorliegenden Erfindung ein Zahlensystem zur Basis 3 verstanden, dessen Stellen also durch die Potenzen 3⁰, 3¹, 3² usw. definiert sind, wobei die Koeffizienten die Werte 0, 1 und 2 annehmen können.

Für eine analoge Realisierung des erfindungsgemäßen Verfahrens werden bevorzugt bipolare Sequenzen als Code-Wörter verwendet, wie sie für sich aus der Veröffentlichung "Messtechnik für das BISDN, Dr. A. Wolf, vde-verlag gmbh Berlin und Offenbach, 1992, Bild 6-13, bekannt sind.

Anspruch 8 betrifft eine vorteilhafte Modifikation des erfindungsgemäßen Verfahrens, indem der Code-Wörter-Vorrat aus mindestens zwei Sätzen von hinreichend orthogonalen Sequenzen gebildet wird. Dadurch ist eine weitere Erhöhung des Code-Wort-Vorrats und damit die Übertragung von Summen-Wörtern möglich, die Daten-Wörter mit erhöhter Anzahl von Datenpositionen repräsentieren.

Problematisch bei der Übertragung mittels bevorzugter M-PSK-(Multi-Phase-Shift-Keying) Modulation ist das sog. "Multipath Fading", das seine Ursache in unerwünschter Signalausbreitung auf Nebenpfaden infolge von Signalreflektionen hat. Ohne Gegenmaßnahmen führt dies zu einem in I-Q-Diagramm-Darstellung ("Scatter-Plot") gedrehten Punktdiagramm und damit empfängerseitig zu Datenfehlern. Eine Kompensation dieses Effekts ist bei bislang bekannten Übertragungsverfahren sehr aufwendig.

Das erfindungsgemäße Verfahren zeichnet gegenüber anderen bekannten Verfahren bereits dadurch aus, dass es diesbezüglich schon äußerst störresistent ist.

Problematisch bleiben allenfalls Datenverfälschungen, die - je nach Zahlenbasis - zu einem Überlauf führen. Darunter ist der Wechsel z.B. bei einem digitalen 4-Bit-Wort (übertragenes Summen-Wort) von dem Wert (0000) auf den Wert (1111) bzw. umgekehrt zu verstehen. Dies wird - unter Bezugnahme auf die entsprechende komplexe I-Q-Darstellung als sog. Zeigerdiagramm - auch als Übertritt über die ("verbotene") Sprunglinie bezeichnet, die in der Zeigerdiagrammdarstellung zwischen dem 1 und 4.Quadranten liegt. Erfindungsgemäß können auch diese Störrisiken reduziert werden, wenn bei der M-PSK-Modulation des Summen-Worts eine M-PSK-Modulationsstufe verwendet wird, die höherstufig ist, als nach der Anzahl möglicher Werte, die das Summen-Wort annehmen kann, notwendig wäre. Beispielsweise bewirkt also bei einem Summen-Wort, das maximal 31 verschiedene Werte pro Datenpositionen annehmen kann, eine 32-wertige M-PSK-Modulation bereits eine Erhöhung der Störresistenz. Eine noch stärkere Erhöhung der Störresistenz bewirkt eine M-PSK-Modulation mit 64 Werten (zu der Basis 2 also die nächsthöhere Stufe). Die Positionierung der einzelnen Werte kann dabei zur Erzielung einer möglichst großen Distanz zur Sprunglinie durch geeignete Off-Set-Beaufschlagung oder Wertezuordnung derart erfolgen, dass die auftretenden Werte mit hohem Abstand zur Sprunglinie positioniert sind.

Das vorbeschriebene Problem des "Multipath Fading" zeigt auch bei sog. Baseband-Übertragungen (d.h. Übertragung ohne Modulation des Summen-Worts) oder bei Übertragungen, die unmodulierten Übertragungen ähnlich sind (wie z.B. amplitudenmodulierte Übertragungen) unerwünschte Störeffekte.

Diesbezüglich sieht eine vorteilhafte Weiterbildung der Erfindung vor, dass die Summen-Wörter mit einer zyklischen Ergänzung versehen werden, die derart bemessen ist, dass trotz übertragungsbedingter Summen-Wort-Interferenzen innerhalb des Korrelationsfensters nur Summen-Wort-Anteile auftreten, die von einem einzigen ursprünglichen Summen-Wort stammen.

Ausführungsbeispiele der Erfindung werden nachfolgend anhand einer Zeichnung näher erläutert; es zeigen:
- Figur 1: schematisch eine erste Realisierung des erfindungsgemäßen Verfahrens,
- Figuren 2a und 2b: beispielhaft in dem Ausführungsbeispiel nach Figur 1 verwendete bzw. generierte Daten bzw. Werte,
- Figuren 3a und 3b: in Abwandlung des Beispiels nach Figuren 2a und 2b sich im Fall eines bipolaren Daten-Worts ergebenden Werte,
- Figuren 4a und 4b: in Abwandlung des Beispiels nach Figuren 2a und 2b sich im Fall eines Daten-Worts ergebenden Werte, das auf einem fünfwertigen Zahlensystem basiert,
- Figur 5: prinzipiell die Umsetzung einer binären zu übertragenden Zahlenfolge (mod2) in z.B. ein Daten-Wort auf der Zahlenbasis (mod4),
- Figur 6: eine weitere Modifikation des erfindungsgemäßen Verfahrens, bei der der Code-Wörter-Vorrat aus zwei Sätzen von Code-Wörtern gebildet ist, und
- Figur 7: schematisch die Problematik des sog. "Multipath Fading" und die Verwendung einer zyklischen Ergänzung.

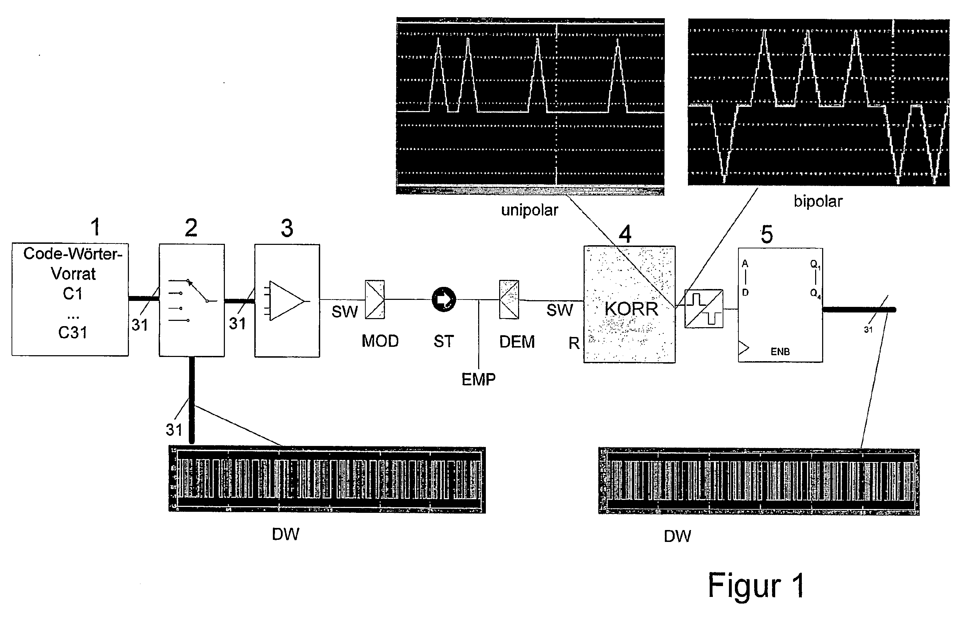

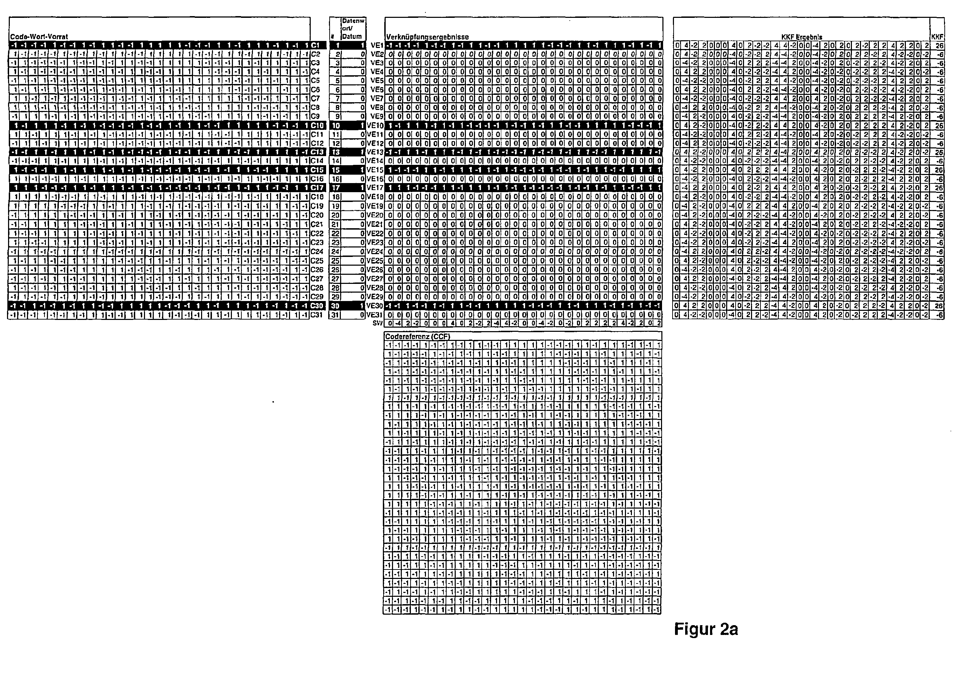

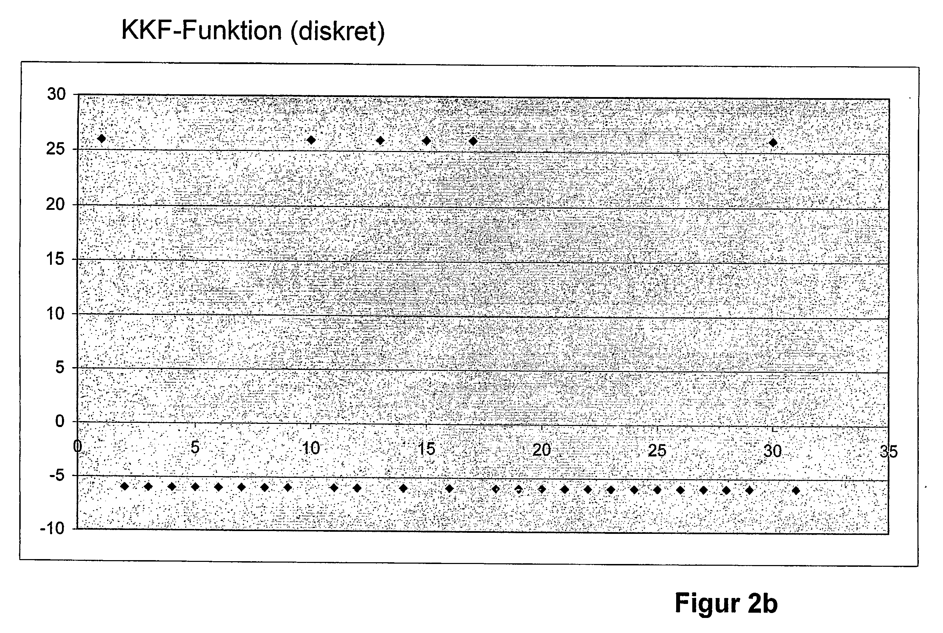

Figur 1 zeigt schematisch eine Realisierung des erfindungsgemäßen Verfahrens. Die im einzelnen verwendeten bzw. generierten Daten und Werte sind in Figur 2a und 2b zusammengestellt.

Zunächst wird in einem mit 1 bezeichneten Verfahrensschritt ein Code-Wörter-Vorrat CV (hier beispielhaft mit 31 Code-Wörtern C1 bis C31) vorgesehen. Die Code-Wörter C2 bis C31 sind durch zyklische 1-Bit-weise Verschiebung aus einer bevorzugt bipolaren m-Sequenz als Grund-Code-Wort C1 mit der Bitfolge

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| -1 | -1 | -1 | -1 | 1 | -1 | -1 | 1 | -1 | 1 | 1 | -1 | -1 | 1 | 1 | 1 | 1 | 1 | -1 | -1 | -1 | 1 | 1 | -1 | 1 | 1 | 1 | -1 | 1 | -1 | 1 |

gebildet. Grundsätzlich wäre auch eine unipolare m-Sequenz verwendbar; in diesem Falle wäre anstelle des jeweiligen Wertes (-1) der Wert (0) vorgesehen. Wie Figur 2a im Detail in der Tabelle "Code-Wort-Vorrat" zeigt, ist das Code-Wort C2 durch zyklische Verschiebung gebildet, indem das letzte Bit (+ 1) des Code-Worts C1 an die erste Stelle verschoben wurde und die übrigen Bits entsprechend eine Stelle zurückgeschoben wurden. Die Generierung derartiger m-Sequenzen ist für sich bekannt und beispielsweise in der Veröffentlichung "Messtechnik für das BISDN", Dr. A. Wolf, vde-verlag gmbh Berlin und Offenbach, 1992, Kapitel 5 ff. ausführlich beschrieben.

Charakteristisch für die Code-Wörter C1 bis C31 ist, dass ihre Kreuzkorrelationsfunktion mit dem Grund-Code-Wort (oder einem anderen Code-Wort des Code-Wörter-Vorrats) - nachfolgend als Referenz bezeichnet - jeweils einen ausgeprägten detektierbaren Extremwert aufweist, wobei die Lage des Extremwerts charakteristisch für das individuelle Code-Wort (und die gewählte Referenz) ist.

Figur 1 zeigt ferner schematisch ein Daten-Wort DW, das 31 einzelne Bit-Stellen (nachfolgend im Hinblick auf nicht digitale zu übertragende Daten-Wörter auch allgemein als Datenpositionen bezeichnet) #1 bis #31 aufweist (Figur 2a). Das Daten-Wort basiert in diesem Beispiel auf einem unipolaren dualen Zahlensystem (0;1) und folgende Bitfolge:

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| 1 | 0 | 0 | 0 | 0 | 0 | 0 | 0 | 0 | 1 | 0 | 0 | 1 | 0 | 1 | 0 | 1 | 0 | 0 | 0 | 0 | 0 | 0 | 0 | 0 | 0 | 0 | 0 | 0 | 1 | 0 |

Wie Figur 2a zeigt, ist jeder Datenposition #1 bis #31 genau ein einziges individuelles und damit unterscheidbares Code-Wort eindeutig und zumindest für die Übertragung eines Daten-Worts fest zugeordnet. Beispielsweise ist der Datenposition #5 (mit dem aktuellen Datum (0)) das Code-Wort C5 mit der Bitfolge:

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| -1 | 1 | -1 | 1 | 1 | -1 | -1 | -1 | -1 | 1 | -1 | -1 | 1 | -1 | 1 | 1 | -1 | -1 | 1 | 1 | 1 | 1 | 1 | -1 | -1 | -1 | 1 | 1 | -1 | 1 | 1 | 1 |

zugeordnet, der Datenposition #10 (mit dem aktuellen Datum (1)) das Code-Wort C10 mit der Bitfolge

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| 1 | -1 | 1 | 1 | 1 | -1 | 1 | -1 | 1 | -1 | -1 | -1 | -1 | 1 | -1 | -1 | 1 | -1 | 1 | 1 | -1 | -1 | 1 | 1 | 1 | 1 | 1 | -1 | -1 | -1 | 1 |

In einem mit 2 bezeichneten Verfahrensschritt wird mit dem Datum D jeder Datenposition #1 bis #31 nun das jeweils dieser Datenposition zugeordnete Code-Wort multiplikativ verknüpft. Die jeweiligen Verknüpfungsergebnisse VE1 bis VE31 sind im einzelnen in Figur 2a dargestellt. So ergibt beispielsweise die multiplikative Verknüpfung des Datums D1 (Wert = (1)) des Daten-Worts DW mit dem zugeordneten Code-Wort C1 das Verknüpfungsergebnis VE1 mit der Bitfolge:

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| -1 | -1 | -1 | -1 | -1 | -1 | -1 | 1 | -1 | 1 | 1 | -1 | -1 | 1 | 1 | 1 | 1 | 1 | -1 | -1 | -1 | 1 | 1 | -1 | 1 | 1 | 1 | -1 | 1 | -1 | 1 |

Dagegen ergibt die multiplikative Verknüpfung des Datums D2 (Wert = (0)) des Daten-Worts DW mit dem zugeordneten Code-Wort C2 das Verknüpfungsergebnis VE2 mit der Bitfolge:

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

Durch die multiplikative Bewertung des Code-Worts C2 mit dem Wert (0) des Datums D2 entsteht eine Nullfolge.

In einem mit 3 bezeichneten Verfahrensschritt werden nun die datenpositionsindividuellen Verknüpfungsergebnisse unter Bildung eines Summen-Wortes SW summiert. Dazu werden - bei wie im Ausführungsbeispiel digitaler Realisierung des Verfahrens - von jeweils allen Verknüpfungsergebnissen die Bits derselben Bitstelle addiert. Wie in Figur 2 gezeigt, ergibt die Summation der jeweils ersten Bits (im Dezimalsystem dargestellt) den Wert (0), der jeweils zweiten Bits (-4) etc..

Das so gebildete, damit ebenfalls 31 Datenpositionen aufweisende Summen-Wort SW wird ggf. in an sich bekannter Weise durch einen Modulator MOD moduliert und über eine - z.B.

Funkstrecke - Strecke ST zu einem Empfänger EMP übertragen und empfängerseitig von einem Demodulator DEM demoduliert.

Die Übertragung kann aber auch - wie nachfolgend noch aufgegriffen - ohne Modulation (als sog. Baseband-Übertragung) erfolgen.

Das andeutungsweise in Figur 1 symbolisch dargestellte empfangene Summen-Wort SW wird in einem mit 4 bezeichneten Verfahrensschritt mit einer Referenz R mittels eines Korrelators KORR kreuzkorreliert. Dazu wird wie aus Figur 2 im einzelnen ersichtlich das empfangene Summen-Wort SW mit der Referenz zyklisch korreliert und daraus die Werte der Kreuzkorrelationsfunktion KKF (Figur 2) gewonnen. Referenz kann das Grund-Code-Wort oder aber auch eine durch zyklische Verschiebung des Grund-Code-Worts gebildete Sequenz sein. Im Beispiel gemäß Figur 2a wird als Referenz das Grund-Code-Wort C1 verwendet; die Kreuzkorrelation erfolgt bitstellenweise dadurch, dass das Summen-Wort SW bitweise gegenüber der Referenz verschoben wird. Praktisch gleichbedeutend ist dazu, die Referenz bitweise gegenüber dem unverschobenen Summen-Wort SW zu verschieben und bitweise zu multiplizieren, wie aus Gründen einer vereinfachten Darstellung in Figur 2 unter der Überschrift "Code-Referenz CCF" erfolgt.

Die jeweiligen datenpositionsindividuellen Multiplikationen des Summen-Worts mit der Referenz ergeben die in Figur 2a im einzelnen aufgeführten Werte der Kreuzkorrelationsfunktion (KKF). Diese Werte weisen positive Extremwerte (26) (Maxima) immer an den Datenpositionen auf, an denen ursprünglich das zugeordnete Code-Wort mit dem größten Wert des Wertevorrats des Datenwortes, nämlich dem Datum (1), bewertet (multipliziert) wurde. Die Werte weisen ein Minimum (-6) an den Datenpositionen auf, an denen ursprünglich das zugeordnete Code-Wort mit dem mit dem kleinsten Wert des Wertevorrats des Datenwortes, nämlich dem Datum (0) bewertet (multipliziert) wurde. Im vorliegenden Falle eines binären Wertevorrats für das Daten-Wort gibt es naturgemäß nur diese beiden Extremwerte und die Zuordnung ist mit einfachster Auswertung möglich.

Damit lässt sich in einem mit 5 bezeichneten Verfahrensschritt auf den im zu übertragenden Daten-Wort an der jeweiligen Datenposition ursprünglich enthaltenen Wert rückschließen. Im Ausführungsbeispiel wird jeder Datenposition, an der ein Maximum (hier: (26)) der Kreuzkorrelation KKF steht, der Wert (1) rekonstruiert und entsprechend an den übrigen Datenpositionen mit dem Minimum (-6) jeweils der Wert (0).

In graphischer Darstellung ergibt sich damit der in Figur 2b unter der Überschrift "KKF-Funktion (diskret)" dargestellte Funktionsverlauf. Neben der expliziten Darstellung in Figur 2b ist dieser Funktionsverlauf in Figur 1 mit der Unterschrift "unipolar" schematisch angedeutet.

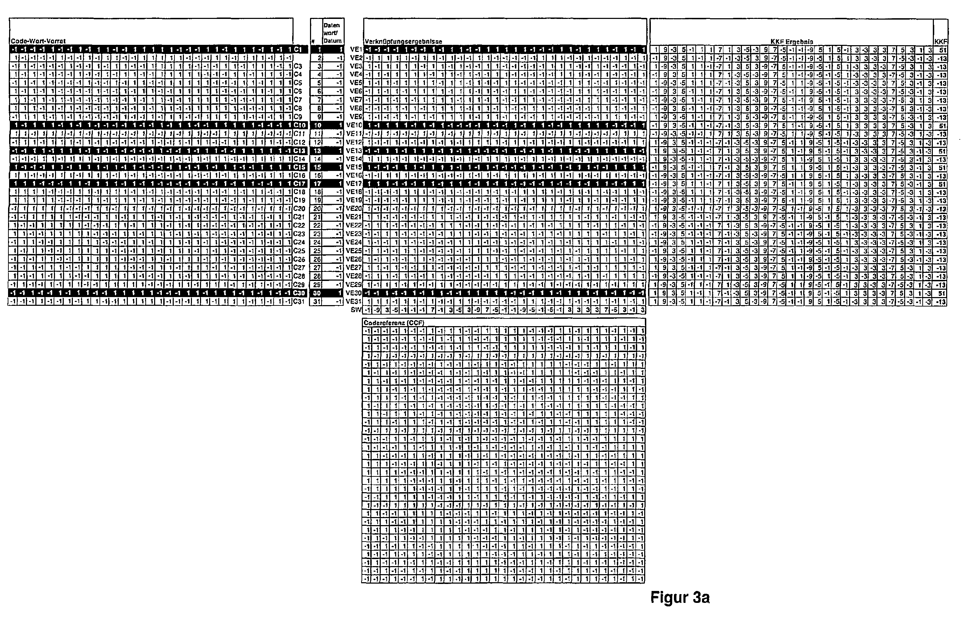

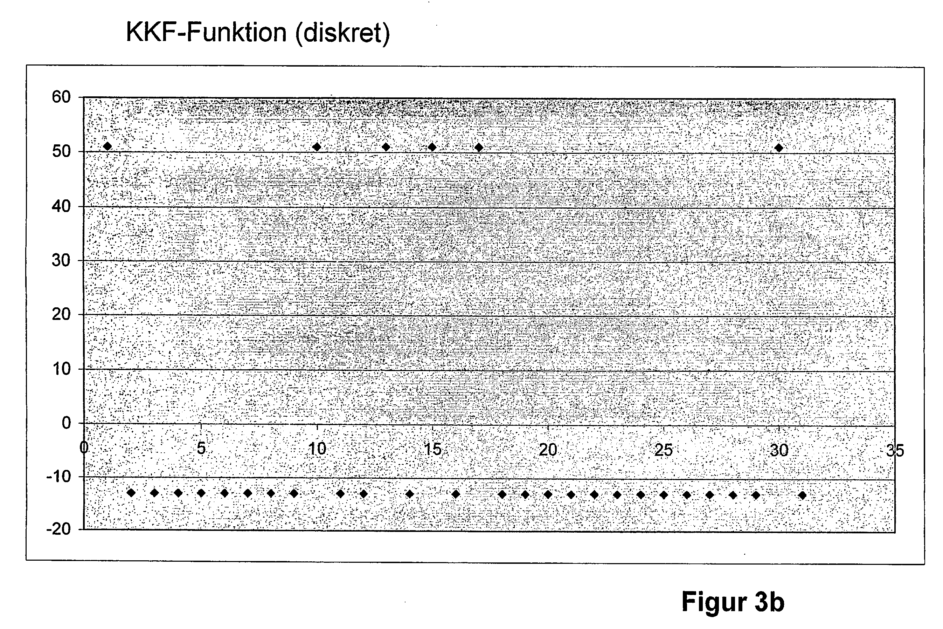

Andeutungsweise ist in Figur 1 schematisch mit der Unterschrift "bipolar" auch eine Übertragung dargestellt, die auf einer bipolaren Datenbasis des Daten-Worts basiert. Hierbei wären also die Datenwerte (0) des vorhergehenden Beispiels durch die Werte (-1) ersetzt. Dies hat den Vorteil einer verbesserten Störunempfindlichkeit und führt außerdem dazu, dass es auch bei Übertragung eines Daten-Worts, dessen einzelne Daten in unipolarer Darstellung alle "0" wären, nicht zu einem zu übertragenden Nullwort als Summen-Wort SW und damit nicht zu einem energielosen Signal kommt. Im einzelnen ergeben sich in diesem Fall eines bipolaren Daten-Worts die detailliert in Figur 3a gezeigten Werte. Im Ergebnis zeigt die Kreuzkorrelationsfunktion (KKF) (vgl. auch graphische Darstellung in Figur 3b) ebenfalls eindeutig detektierbare Maxima (hier: (51)) an jeder Datenposition, deren zugeordnetes Code-Wort ursprünglich mit dem Datum (1) bewertet (multipliziert) wurde und Minima (-13) an den Datenpositionen, an denen ursprünglich das zugeordnete Code-Wort mit dem Datum (0) bewertet (multipliziert) wurde.

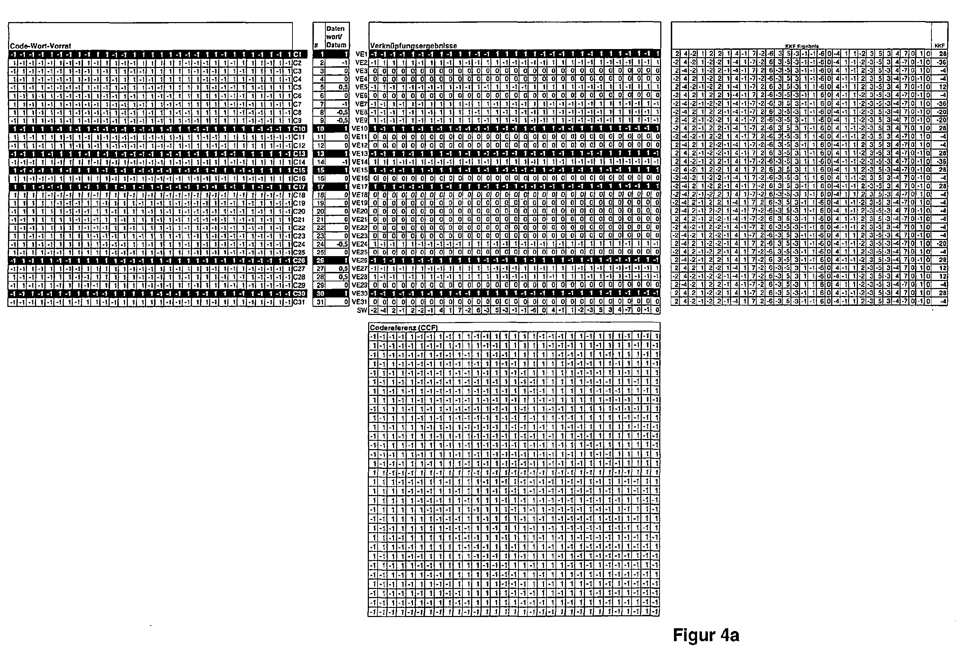

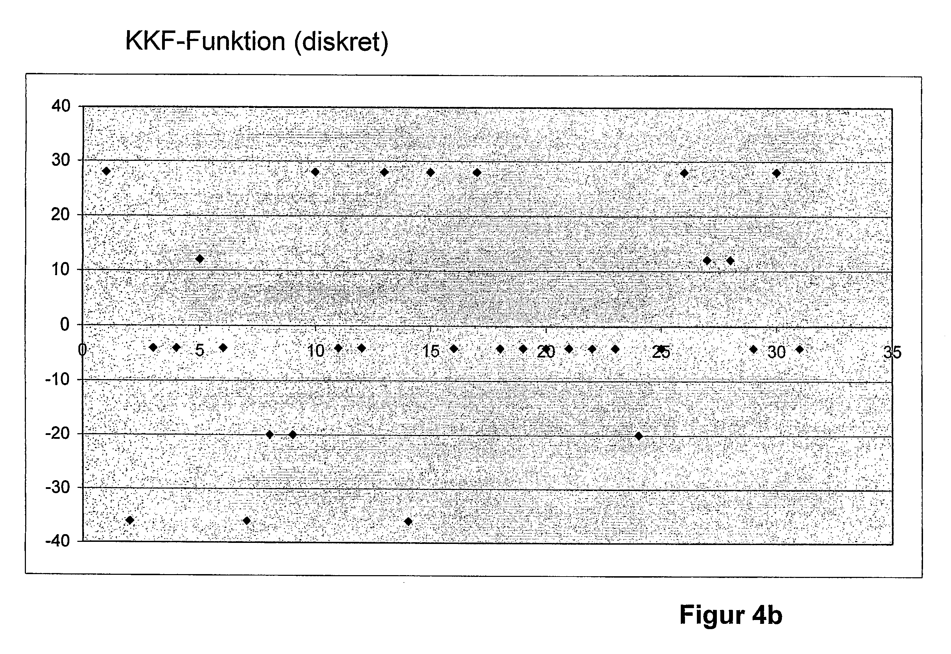

In entsprechender Weise lässt sich die übertragene Datenrate noch weiter steigern, wenn das Daten-Wort auf einem höherwertigen Zahlensystem basiert. Dies ist in Figur 4a, 4b beispielhaft dargestellt für ein Datenwort, das die Werte (-1), (-0,5), (0), (+0,5) und (+1) enthält und damit auf einem fünfwertigen Zahlensystem basiert.

Das angenommene Daten-Wort enthält in den Datenpositionen #1 bis #31 die diskreten Werte
(1), (-1), (0), (0), (0,5), (0), (-1), (-0,5), (-0,5), (1), (0), (0) ...usw....(1), (0) (vgl. Figur 4a).

Daraus resultiert nach multiplikativer Verknüpfung mit dem jeweils zugeordneten Code-Wort C1 bis C31 und anschließender Summenbildung das Summen-Wort SW:

| | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|
| -2 | -4 | 2 | -1 | 2 | -2 | -1 | 4 | 1 | 7 | -2 | 6 | -3 | 5 | -3 | -1 | -1 | -6 | 0 | 4 | -1 | 1 | -2 | -3 | 5 | 3 | 4 | -7 | 0 | -1 | 0 |

Das Summen-Wort besteht in diesem Ausführungsbeispiel aus einer diskreten Zahlenfolge; die Übertragung kann aber auch als analoges Signal erfolgen.

Das empfangene Summen-Wort wird wie vorbeschrieben mit der Referenz (z.B. C1) kreuzkorreliert und ergibt die in der Spalte KKF ersichtlichen diskreten Werte. Dabei entspricht das absolute Maximum (28) dem größten Wert - nämlich (1) - des Wertevorrats des Daten-Worts, das absolute Minimum (-36) dem kleinsten Wert - nämlich (-1) des Wertevorrats des Daten-Worts. Aus der Kenntnis der absoluten Extremwerte lässt sich nun ableiten, wie die übrigen Werte der Kreuzkorrelationsfunktion entsprechenden Werten des Wertevorrats des Daten-Worts zuzuordnen sind. Eine Realisierungsmöglichkeit dazu bildet eine von den absoluten Extremwerten ausgehende Wertebandbildung. Vorteilhafterweise können die Wertebänder dabei auch über die absoluten Extremwerte hinausgehen, um im Falle von Datenübertragungsfehlern auch oberhalb bzw. unterhalb der absoluten (bei fehlerfreier Übertragung vorliegenden) Extremwerte noch mit zu umfassen ("einzufangen"). Im vorliegenden Beispiel könnte ausgehend von der Differenz der absoluten Extremwerte (nämlich 28 - (-36) = 64 diese Spanne in 4 vorzugsweise gleiche Bänder mit einer Breite von 64/4 = 16 unterteilt werden. Die Bänder würden zum "Einfangen" von Übertragungsfehlern dann wie folgt liegen:

| Band | Wertebereich | Umfasst Wert (x) des Daten-Worts |
|---|---|---|
| 1 | -44 bis -28 | (-1) |
| 2 | -27 bis -12 | (-0,5) |
| 3 | -11 bis +4 | (0) |
| 4 | +5 bis +20 | (+0,5) |
| 5 | +21 bis +36 | (+1) |

Man erkennt also, dass aus der relativen Lage der Werte der Kreuzkorrelationsfunktion und unter Auswertung der Extremwerte auf alle Daten des Daten-Worts rückgeschlossen werden kann. Dem Wert (12) der Kreuzkorrelationsfunktion wird also der Wert (0,5) des Wertevorrats des Daten-Worts, dem Wert (4) der Wert (0) und dem Wert (-20) der Wert (-0,5) des Daten-Worts an der jeweiligen Datenposition zugeordnet.

Die für die vorbeschriebenen Zuordnungen notwendigen Informationen können z.B. bereitgestellt werden, indem in jedem Daten-Wort Datenpositionen für eine diesbezügliche Information reserviert werden. So könnten beispielsweise die ersten zwei Datenpositionen eines z.B. digitalen Daten-Worts mit dem höchsten bzw. niedrigsten Wert des für das Daten-Wort vorgesehenen Wertevorrats gefüllt sein. Es können aber auch empfängerseitig entsprechende Zuordnungstabellen hinterlegt sein, die in Kenntnis der (konstanten) Wertigkeit der verwendeten Daten-Wörter aus den auftretenden Extremwerten eine solche (bänderweise) Zuordnung vornehmen.

In der graphischen Darstellung der KKF-Funktion in Figur 4b erkennt man noch immer eindeutig identifizierbare Extremwerte, deren Abstand allerdings im Vergleich zu den vorhergehenden Beispielen verringert ist - damit ist ersichtlich, dass die Steigerung der übertragbaren Datenrate zu Lasten des Störabstandes und damit der Störunempfindlichkeit geht. Es gibt jedoch viele Anwendungsfälle, insbesondere kurzer Übertragungsstrecken, wo dieser Störabstand durchaus ausreichend ist.

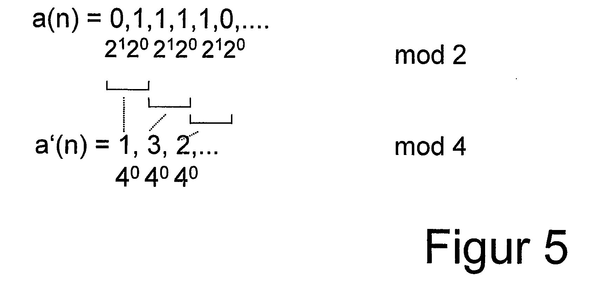

Andererseits ist vorteilhafterweise die Datenrate erheblichgesteigert, indem wie in Figur 5 prinzipiell gezeigt eine binäre Zahlenfolge eines zu übertragenden Wortes von mod2 in z.B. mod4 konvertiert und damit die Datenübertragung komprimiert wird.

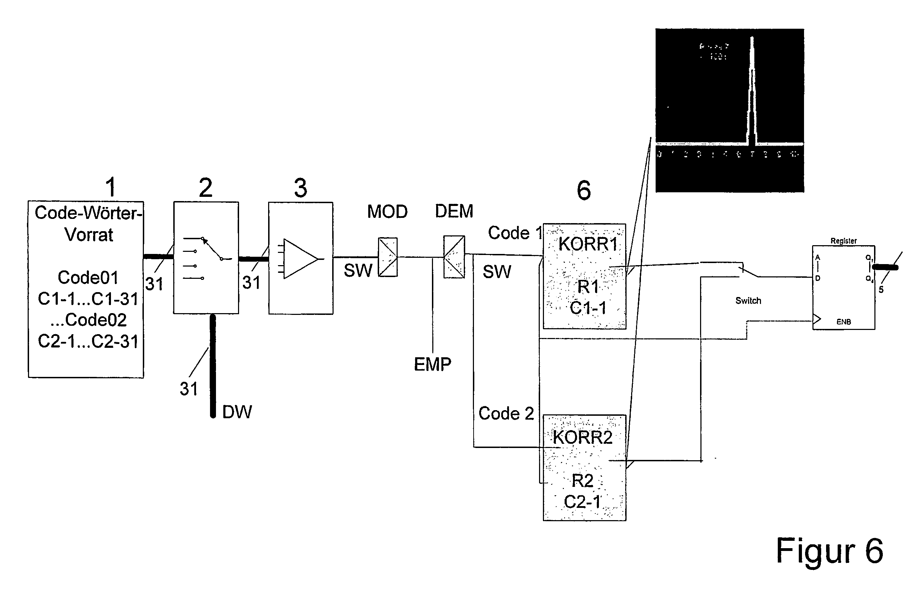

Figur 6 zeigt eine weitere Modifikation des erfindungsgemäßen Verfahrens. Hier werden im wesentlichen dieselben Verfahrensschritte wie im Zusammenhang mit Figur 1 beschrieben durchgeführt, allerdings unter Verwendung eines Code-Wörter-Vorrats, der aus zwei Sätzen von Code-Wörtern Code01 und Code02 besteht. Die Sätze von Code-Wörtern bestehen aus zueinander orthogonalen Sequenzen. Die Orthogonalität bewirkt, dass die Kreuzkorrelationsfunktion von Code-Wörtern C1-1 bis C1-31 des ersten Satzes Code01 miteinander und die Kreuzkorrelationsfunktion von Code-Wörtern C2-1 bis C2-31 des zweiten Satzes Code02 miteinander jeweils einen ausgeprägten detektierbaren Extremwert aufweist. Dagegen weist die Kreuzkorrelationsfunktion der Code-Wörter C1-1 bis C1-31 des ersten Satzes Code01 mit den Code-Wörtern C2-1 bis C2-31 des zweiten Satzes keinen ausgeprägten detektierbaren Extremwert auf. Die Codewörter jeden Satzes sind wie beschrieben aus zyklischer Verschiebung aus einem jeweiligen Satz-Grund-Code-Wort des ersten bzw. des zweiten Satzes Code01 bzw. Code02 gebildet, wobei wie vorbeschrieben die Anzahl individueller Code-Wörter des Vorrats insgesamt mindestens der Anzahl der Datenpositionen des Daten-Wortes entspricht.

Wie Figur 6 schematisch weiterhin zeigt, wird das empfangene Summen-Wort SW in einem Verfahrensschritt 6 zwei Korrelatoren KORR1, KORR2 parallel zugeführt. Der Korrelator KORR1 führt dabei wie ausführlich beschrieben eine Kreuzkorrelation mit einer Referenz R1 durch; die Referenz kann das Grund-Code-Wort des Satzes Code01 oder auch eine durch zyklische Verschiebung diese Grund-Code-Worts gebildete Sequenz sein. Im Beispiel als Referenz das Grund-Code-Wort C1-1 verwendet. Parallel führt der Korrelator KORR2 eine Kreuzkorrelation mit einer Referenz R2 durch, die dem Grund-Code-Wort C2-1 des Satzes Code02 entspricht. Aufgrund der Orthogonalität der Code-Sätze Code01 und Code02 ergibt nur eine der Kreuzkorrelationen jeweils ein ausgeprägtes Maximum, nämlich bei Zugrundelegung der Referenz, die dem Grund-Code-Wort des Satzes entspricht, aus dem das der jeweiligen Datenposition zugeordnete Code-Wort gewählt wurde. Die übrige Auswertung erfolgt wie vorbeschrieben. Damit kann insgesamt eine höhere Ratenrate übertragen werden.

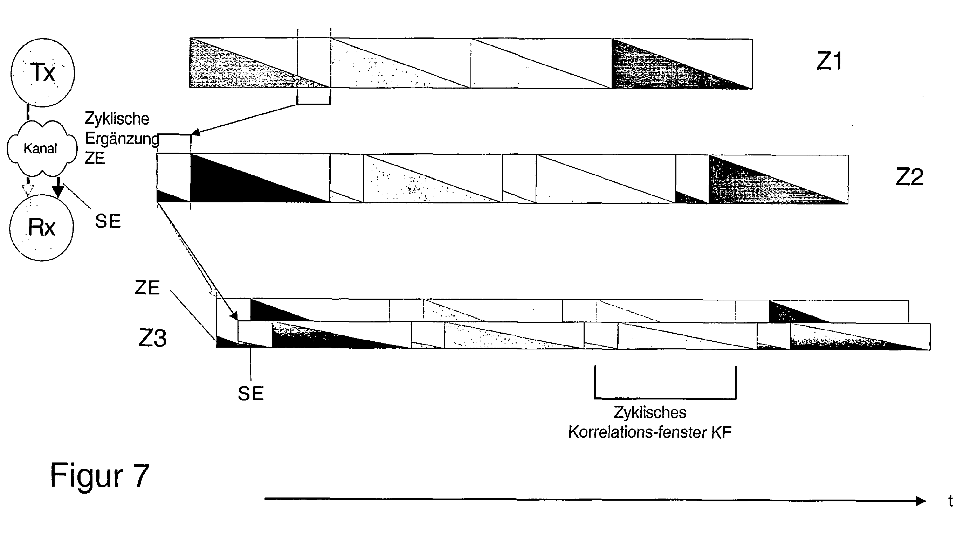

Figur 7 zeigt schematisch die Problematik des sog. "Multipath Fading", das auch bei sog. Baseband-Übertragungen zwischen einem Sender Tx und einem Empfänger Rx (d.h. Übertragung ohne Modulation des Summen-Worts) oder bei Übertragungen, die unmodulierten Übertragungen ähnlich sind (wie. z.B. amplitudenmodulierte Übertragungen) unerwünschte Störeffekte SE hervorrufen kann. Die schematisch in Zeile Z1 dargestellten Summen-Wörter führen aufgrund unerwünschter Reflektionen zu überlagerten Signalen SE, wie sie in Zeile Z2 dargestellt sind. Diese Signale werden erfindungsgemäßen nun mit einer zyklischen Ergänzung ZE des jeweiligen Summen-Worts versehen, die derart bemessen ist, dass trotz übertragungsbedingter Summen-Wort-Interferenzen innerhalb des Korrelationsfensters KF nur Summen-Wort-Anteile auftreten, die von einem einzigen ursprünglichen Summen-Wort stammen.

## Patentansprüche

1. Verfahren zum Übertragen eines Daten-Worts (DW), das eine Folge von einzelnen Daten (0,1) in aufeinanderfolgenden Datenpositionen (#1...#31) enthält, bei dem
a) ein Code-Wörter-Vorrat (CV) bereitgestellt wird, wobei
- die Anzahl individueller Code-Wörter (C1...C31) des Vorrats mindestens der Anzahl der Datenpositionen (#1...#31) des Daten-Wortes (DW) entspricht und
- die Kreuzkorrelationsfunktion jedes Code-Worts (C2...C31) mit einer bestimmten Referenz (C1) jeweils einen ausgeprägten detektierbaren Extremwert aufweist, wobei dessen Lage charakteristisch für das individuelle Code-Wort (C2) ist,
b) jeder Datenposition (#1) des Daten-Worts (DW) ein individuelles Code-Wort (C1) zugeordnet wird,
c) das zugeordnete Code-Wort (C5) mit dem jeweiligen Datum (0) der Datenposition (#5) unter Bildung eines datenpositionsindividuellen Verknüpfungsergebnisses (VE5) verknüpft wird,
d) die datenpositionsindividuellen Verknüpfungsergebnisse (VE1...VE31) unter Bildung eines Summen-Wortes (SW) addiert werden,
e) das Summen-Wort (SW) zu einem Empfänger (EMP) übertragen wird,
f) das empfangene Summen-Wort (SW) mit einer Referenz (R) kreuzkorreliert wird, wobei diese Referenz (R) bei Kreuzkorrelation mit jedem Code-Wort (C1...C31) jeweils einen ausgeprägten detektierbaren Extremwert aufweist, wobei dessen Lage charakteristisch für das individuelle Code-Wort (C2) ist,
g) aus der Lage und Größe der Werte der so gebildeten Korrelationsfunktion (KKF) die jeweiligen datenpositionsindividuellen Daten (0,1) des Daten-Worts (DW) rekonstruiert werden, indem nach fester Zuordnung jedem Wert (-6;26) ein entsprechendes Datum (0,1) zugeordnet wird.

2. Verfahren nach Anspruch 1,
- wobei die Code-Wörter durch zyklische Verschiebung aus einer m-Sequenz, einem Barker-Code, einer Gordon-Mills-Welch (GMW)-Sequenz oder einem Gold-Code gebildet werden.

3. Verfahren nach Anspruch 1,
- wobei die Code-Wörter aus zyklischer Verschiebung aus einem CCK-(Complementary-Code-Keying)-Code gebildet werden.

4. Verfahren nach Anspruch 1, 2 oder 3,
- wobei für das Daten-Wort (DW) unipolare duale Werte (0,1) zugelassen werden.

5. Verfahren nach Anspruch 1, 2 oder 3,
- wobei für das Daten-Wort (DW) bipolare duale Werte (-1,1) zugelassen werden.

6. Verfahren nach Anspruch 1, 2 oder 3,
- wobei für das Daten-Wort dreiwertige oder höherwertige Zahlensysteme zugelassen werden.

7. Verfahren nach einem der vorangehenden Ansprüche,
- wobei als Code-Wörter bipolare Sequenzen verwendet werden.

8. Verfahren zum Übertragen eines Daten-Worts (DW), das eine Folge von einzelnen Daten (0,1) in aufeinanderfolgenden Datenpositionen (#1...#31) enthält, bei dem
a) ein Code-Wörter-Vorrat (CV) bereitgestellt wird, wobei
- die Anzahl individueller Code-Wörter des Vorrats mindestens der Anzahl der Datenpositionen des Daten-Wortes (DW) entspricht,
- als Code-Wörter (C1-1...C1-31; C2-1...C2-31) mindestens zwei Sätze (Code01, Code02) von orthogonalen Sequenzen verwendet werden, deren Orthogonalität bewirkt, dass
- die Kreuzkorrelationsfunktion von Code-Wörtern (C1-1...C1-31) des ersten Satzes (Code01) mit einer bestimmten ersten Satz-Referenz einen ausgeprägten detektierbaren Extremwert und die Kreuzkorrelationsfunktion von Code-Wörtern (C2-1...C2-31) des zweiten Satzes (Code02) mit einer bestimmten zweiten Satz-Referenz einen ausgeprägten detektierbaren Extremwert aufweisen, wobei deren Lage jeweils charakteristisch für das individuelle Code-Wort des jeweiligen Code-Wort-Satzes ist,
- während die Kreuzkorrelationsfunktion der Code-Wörter (C1-1...C1-31) des ersten Satzes (Code01) mit der zweiten Satz-Referenz (C2-1) des zweiten Satzes (Code02) und die Kreuzkorrelationsfunktion von Code-Wörtern (C2-1...C2-31) des zweiten Satzes (Code02) mit der ersten Satz-Referenz (C1-1) keinen ausgeprägten detektierbaren Extremwert aufweisen,
b) jeder Datenposition des Daten-Worts ein individuelles Code-Wort zugeordnet wird,
c) das zugeordnete Code-Wort mit dem jeweiligen Datum (0,1) der Datenposition unter Bildung eines datenpositionsindividuellen Verknüpfungsergebnisses verknüpft wird,
d) die datenpositionsindividuellen Verknüpfungsergebnisse unter Bildung eines Summen-Wortes (SW) addiert werden,
e) das Summen-Wort (SW) zu einem Empfänger übertragen wird,
f) das empfangene Summen-Wort (SW) jeweils mit einer ersten und einer zweiten Satz-Empfangs-Referenz (R1, R2) kreuzkorreliert wird, wobei die Kreuzkorrelationsfunktion von Code-Wörtern (C1-1...C1-31) des ersten Satzes (Code01) mit der ersten Satz-Empfangs-Referenz (R1) einen ausgeprägten detektierbaren Extremwert und die Kreuzkorrelationsfunktion von Code-Wörtern (C2-1...C2-31) des zweiten Satzes (Code02) mit der zweiten Satz-Empfangs-Referenz (R2) einen ausgeprägten detektierbaren Extremwert aufweisen, wobei deren Lage jeweils charakteristisch für das individuelle Code-Wort des jeweiligen Code-Wort-Satzes ist, und
g) aus der Lage und Größe der Werte der so gebildeten Korrelationsfunktionen die jeweiligen datenpositionsindividuellen Daten des Daten-Worts (DW) rekonstruiert werden, indem nach fester Zuordnung jedem Wert ein entsprechendes Datum zugeordnet wird.

9. Verfahren nach einem der vorangehenden Ansprüche,
- wobei das Summen-Wort (SW) zur Übertragung M-PSK (MultiPhase-Shift-Keying) moduliert wird und dabei eine M-PSK-Modulationsstufe verwendet wird, die höherstufig ist als nach der Anzahl möglicher Werte, die das Summen-Wort annehmen kann, notwendig wäre.

10. Verfahren nach einem der vorangehenden Ansprüche,
- wobei die Summen-Wörter (SW) mit einer zyklischen Ergänzung (ZE) versehen werden, die derart bemessen ist, dass trotz übertragungsbedingter Summen-Wort-Interferenzen innerhalb des Korrelationsfensters (KF) nur Summen-Wort-Anteile auftreten, die von einem einzigen ursprünglichen Summen-Wort stammen.

## Claims

1. A method for transmitting a data word (DW) which contains a sequence of individual data (0,1) in sequential data positions (#1...#31), whereby
a) a code word supply (CV) is made available,
- the number of individual codes words (CI...C31) of the supply corresponding at least to the number of data positions (#1 ...#31) of the data word (DW); and
- the cross-correlation function of each code word (C2...C31) with a specific reference (C1) having a distinct, detectable extreme value, whose position is characteristic of the individual code word (C2);
b) an individual code word (C1) is assigned to each data position (#1) of the data word (DW);
c) the assigned code word (C5) is combined with the particular datum (0) of the data position (#5), forming a data position-specific combination result (VE5);
d) the data position-specific combination results (VE1...VE31) are summed, forming a sum word (SW);
e) the sum word (SW) is transmitted to a receiver (EMP);
f) the received sum word (SW) is cross-correlated with a reference (R), this reference (R), when cross-correlated with each code word (Cl...C31), having in each case a distinct, detectable extreme value, its position being characteristic of the individual code word (C2);
g) from the position and magnitude of the values of the thus formed correlation function (KKF), the particular data position-specific data (0,1) of the data word (DW) are reconstructed in that, following a fixed assignment, a corresponding datum (0,1) is assigned to each value (-6;26).

2. Method according to claim 1,
whereby the code words being formed by cyclical shifting of an m-sequence, a Barker code, a Gordon Mills Welch (GMW) sequence or a Gold code.

3. Method according to claim 1,
whereby the code words being formed by cyclical shifting of a CCK (Complementary Code Keying) code.

4. Method according to claim 1, 2 or 3,
whereby unipolar dual values (0,1) being permitted for the data word (DW).

5. Method according to claim 1, 2 or 3,
whereby bipolar dual values (-1,1) being permitted for the data word (DW).

6. Method according to claim 1, 2 or 3,
whereby ternary or higher base number systems being permitted for the data word.

7. The method according to any one of the preceding claims, whereby bipolar sequences being used as code words.

8. A method for transmitting a data word (DW) which contains a sequence of individual data (0,1) in sequential data positions (#1...#31), whereby
a) a code word supply (CV) is made available, whereby
- the number of individual codes words of the supply corresponding at least to the number of data positions of the data word (DW); and
- as code words (C1-1...C1-31; C2-1...C2-31), at least two sets (code 01, code 02) of orthogonal sequences being used whose orthogonality effects that
- the cross-correlation function of code words (C1-1...C1-31) of the first set (code 01) with a specific first set reference has a distinct, detectable extreme value; and the cross-correlation function of code words (C2-1...C2-31) of the second set (code 02) with a specific second set reference has a distinct, detectable extreme value, whereby their respective position being characteristic in each case of the individual code word of the particular code word set;
- whereas the cross-correlation function of the code words (C1-1...C1-31) of the first set (code 01) with the second set reference (C2-1) of the second set (code 02) and the cross-correlation function of code words (C2-1...C2-31) of the second set (code 02) with the first set reference (C1-1) do not have any distinct, detectable extreme value;
b) an individual code word is assigned to each data position of the data word;
c) the assigned code word is combined with the particular datum (0,1) of the data position, forming a data-position specific combination result;
d) the data position-specific combination results are summed, forming a sum word (SW);
e) the sum word (SW) is transmitted to a receiver;
f) the received sum word (SW) is cross-correlated in each case with a first and a second set receiving reference (R1, R2), the cross-correlation function of code words (C1-1...C1-31) of the first set (code 01) with the first set receiving reference (R1) having a distinct, detectable extreme value; and the cross-correlation function of code words (C2-1...C2-31) of the second set (code 02) with the second set receiving reference (R2) having a distinct, detectable extreme value, its position being characteristic in each case of the individual code word of the particular code word set; and,
g) from the position and magnitude of the values of the thus formed correlation functions, the particular data position-specific data of the data word (DW) being reconstructed in that, following a fixed assignment, a corresponding datum is assigned to each value.

9. Method according to one of the preceding claims,
whereby the sum word (SW) being M-PSK (multiphase shift keying) modulated for transmitting and, in the process, an M-PSK modulation stage being used that is of a higher level than would be necessary based on the number of possible values that the sum word is able to assume.

10. Method according to one of the preceding claims,
whereby the sum words (SW) being provided with a cyclic supplement (ZE) that is dimensioned in such a way that, in spite of transmission-induced sum word interferences within the correlation window (KF), only sum word components occur which originate from one single, original sum word.

## Revendications

1. Procédé pour transmettre un mot de donnée (DW), qui contient une suite de données individuelles (0,1) dans des positions de données successives (#1 ...#31), dans lequel
a) un stock de mots codes (CV) est mis à disposition de façon telle
- que le nombre de mots-codes individuels (C1...C31) du stock correspond au moins au nombre des positions de données (#1...#31) du mot de donnée (DW) et
- que la fonction de corrélation croisée de chaque mot code (C2...C31) avec une référence définie (C1) présente une valeur extrême prononcée détectable respective, de façon telle que sa position est caractéristique pour le mot code individuel (C2).
b) un mot code individuel (C1) est attribué à chaque position de donnée (#1) du mot de donnée (DW),
c) un résultat d'opération (VE5) propre à la position de la donnée est formé par une opération sur le mot code attribué (C5) et la date respective (0) de la position de donnée (#5),
d) les résultats d'opérations propres à la position de la donnée (VE1...VE31) sont additionnés en formant un mot somme (SW),
e) le mot somme (SW) est transmis à un récepteur (EMP),
f) la fonction de corrélation croisée du mot somme reçu avec une référence (R) est calculée, de façon telle que la fonction de corrélation croisée de cette référence (R) avec chaque mot code (C1...C31) présente une valeur extrême prononcée détectable, chaque valeur extrême prononcée ayant une position caractéristique pour le mot code individuel (C2) et
g) les dates propres à la position de la donnée (0,1) du mot de donnée (DW) sont reconstruites utilisant la position et la grandeur des valeurs de la fonction de corrélation croisée (KKF) ainsi formée, en attribuant à chaque valeur (-6 ; 26) une date correspondante (0,1) par une attribution fixe.

2. Procédé selon la revendication 1
- dans lequel les mots codes sont formés par des déplacements cycliques d'une m-séquence, d'un code Barker, d'une séquence Gordon-Mills-Welch (GMW) ou d'un code Gold.

3. Procédé selon la revendication 1
- dans lequel les mots codes sont formés par des déplacements cycliques d'un code CCK (Complementary-Code-Keying).

4. Procédé selon la revendication 1, 2 ou 3
- dans lequel des valeurs binaires unipolaires (0,1) sont admises pour le mot de donnée (DW).

5. Procédé selon la revendication 1, 2 ou 3
- dans lequel des valeurs binaires bipolaires (-1,1) sont admises pour le mot de donnée (DW).

6. Procédé selon la revendication 1, 2 ou 3
- dans lequel des systèmes de numération trivalents ou plus élevés sont admis pour le mot de donnée.

7. Procédé selon l'une des revendications précédentes
- dans lequel des séquences bipolaires sont utilisées en tant que mots codes.

8. Procédé pour transmettre un mot de donnée (DW), qui contient une suite de données individuelles (0,1) dans des positions de données successives (#1 ...#31), dans lequel
a) un stock de mots codes (CV) est mis à disposition, de façon telle
- que le nombre de mots codes individuels du stock correspond au moins au nombre des positions de données du mot de donnée (DW),
- que au moins deux jeux (code01, code02) de séquences orthogonales sont utilisés en tant que mots codes (C1-1...C1-31 ; C2-1...C2-31), l'orthogonalité des séquences ayant pour conséquence, que
- la fonction de corrélation croisée de mots codes (C1-1...C1-31) du premier jeu (code01) avec un premier jeu de référence définie et la fonction de corrélation croisée de mots codes (C2-1...C2-31) du deuxième jeu (code02) avec un deuxième jeu de référence définie présentent une valeur extrême prononcée détectable de façon telle que leur positions sont caractéristiques pour le mot code individuel du jeu de mot code respectif,
- tandis que, la fonction de corrélation croisée de mots codes (C1-1...C1-31) du premier jeu (code01) avec le deuxième jeu de référence (C2-1) du deuxième jeu (code02) et, la fonction de corrélation croisée de mots codes (C2-1...C2-31) du deuxième jeu (code02) avec le premier jeu de référence (C1-1) ne présentent pas de valeur extrême prononcée détectable,
b) un mot code individuel est attribué à chaque position de donnée du mot de donnée ,
c) un résultat d'opération propre à la position de la donnée est formé par une opération sur le mot code attribué et la date respective (0,1) de la position de donnée ,
d) les résultats d'opérations propres à la position de la donnée sont additionnés en formant un mot somme (SW),
e) le mot somme (SW) est transmis à un récepteur,
f) la fonction de corrélation croisée du mot somme reçu (SW) avec un premier et un deuxième jeu de référence reçu (R1, R2)est calculée de façon telle que la fonction de corrélation croisée de mots codes (C1-1...C1-31) du premier jeu (code01) avec le premier jeu de référence reçu (R1) et la fonction de corrélation croisée de mots codes (C2-1...C2-31) du deuxième jeu (code02) avec le deuxième jeu de référence reçu (R2) présentent chacune une valeur extrême prononcée détectable, tel que la position de chacune est caractéristique du mot code individuel du jeu de mot code respectif, et
g) les dates propres à la position de la donnée du mot de donnée (DW) sont reconstruites utilisant la position et la grandeur des valeurs de la fonction de corrélation croisée (KKF) ainsi formée, en attribuant à chaque valeur (-6 ; 26) une date correspondante par une attribution fixe.

9. Procédé selon l'une des revendications précédentes
- dans lequel le mot somme (SW) est modulé de type M-PSK (Multi-Phace-Shift-Keying) pour la transmission en utilisant un niveau de modulation M-PSK plus élevé qu'il ne serait nécessaire par rapport au nombre des valeurs possibles que peut prendre le mot somme.

10. Procédé selon l'une des revendications précédentes
- dans lequel les mots sommes (SW) sont pourvus d'un complément cyclique (ZE), qui est mesuré de façon à ce que malgré des interférences du mot somme relatives aux conditions de transmission, seules des parties de mots sommes, qui sont originaires d'un seul mot somme original, soient présentes à l'intérieur de la fenêtre de corrélation (KF).
